Europäisches Patentamt

European Patent Office

Office européen des brevets

(19)

(11) Publication number: **0 274 437 B1**

# EUROPEAN PATENT SPECIFICATION

(12)

(45) Date of publication of patent specification: **13.04.94**   (51) Int. Cl.⁵: **G11B 5/64**, G11B 5/72

(21) Application number: **88300103.4**

(22) Date of filing: **07.01.88**

(54) **Magnetic recording medium.**

(30) Priority: **07.01.87 JP 551/87**
**24.06.87 JP 155346/87**
**02.12.87 JP 304798/87**

(43) Date of publication of application:
**13.07.88 Bulletin 88/28**

(45) Publication of the grant of the patent:
**13.04.94 Bulletin 94/15**

(84) Designated Contracting States:
**DE GB**

(56) References cited:
**EP-A- 0 198 472**
**DE-A- 3 117 931**
**DE-A- 3 146 749**

**PATENTS ABSTRACTS OF JAPAN,vol. 3, no.
41 (E-103), April 10, 1979, & JP-A-54 21 305
(MATSUSHITA DENKI SANGYO K.K.)
17-02-1979**

**PATENT ABSTRACTS OF JAPAN, vol. 9, no.
58, (P-341)(1781) March 14, 1985 & JP-A-59
193 536 (HITACHI CONDENSER K.K.)
02-11-1984**

(73) Proprietor: **Hitachi Maxell Ltd.
No 1-1-88, Ushitora
Ibaraki-shi
Osaka-fu(JP)**

(72) Inventor: **Isoe, Noboru
2-1-201, Togashira-1-chome
Toride-shi(JP)**
Inventor: **Mizumura, Tetsuo
1-6-205, Togashira-6-chome
Toride-shi(JP)**
Inventor: **Wakai, Kunio
7-17 Goshogaoka-5-chome
Moriyamachi
Kitasoma-gun Ibaraki-ken(JP)**
Inventor: **Niimi, Hideaki
37-9, Sakuragaokamachi
Tsuchiura-shi(JP)**

(74) Representative: **Cresswell, Thomas Anthony
et al
J.A. KEMP & CO.
14 South Square
Gray's Inn
London WC1R 5LX (GB)**

EP 0 274 437 B1

## Description

This invention relates to a magnetic recording medium, and more particularly to a magnetic recording medium with surprisingly enhanced corrosion resistance.

Magnetic recording media so far usually used comprise a non-magnetic substrate such as plastic film, etc., and a ferromagnetic metal film of cobalt, cobalt alloy, etc. formed thereon by oblique incidence vapor deposition (US Patent No. 4,567,116; US Patent No. 4,596,735), but such magnetic recording media are distinguished in the high density recording characteristics, but have such a disadvantage as unsatisfactory corrosion resistance, because the metal is exposed to the surface and is corroded with moisture or corroding gases such as $SO_x, NO_x$, etc. in the atmosphere.

To improve the corrosion resistance, it has been proposed to further form a protective film of Cr, Ni, Aℓ, Ti, etc. known as highly anti-corrosion metals on the ferromagnetic metal film [Japanese Patent Application Kokai (Laid-open) No. 59-193536; Japanese Patent Application Kokai (Laid-open) No. 54-21305]. However, the corrosion resistance problem has not been completely solved with the so far proposed protective films.

Particularly when a non-magnetic substrate with projections on the surface is used in order to improve the runnability of a magnetic recording medium, defects due to the projections on the substrate surface also appear on the ferromagnetic metal surface, and a protective film has similar defects on the surface, resulting in the failure of corrosion resistance.

EP-A-0 198 472 describes magnetic recording media with improved corrosion and wear resistance arising from the use of a skin layer of an amorphous cobalt compound characterised by its X-ray photo-electron spectrum.

An object of the present invention is to provide a magnetic recording medium with a distinguished corrosion resistance, where satisfactory improvement of the corrosion resistance can be obtained by forming a protective film of anti-corrosion metal on the ferromagnetic metal film.

Another object of the present invention is to provide a magnetic recording medium with distinguished corrosion resistance, wearing resistance and recording-reproducing characteristics, where said disadvantages of the prior art have been completely overcome.

As a result of extensive studies and trial preparation of magnetic recording media, the present inventors have found that the corrosion resistance of a magnetic recording medium comprising a non-magnetic substrate, a ferromagnetic metal film and a protective layer, as formed successively one upon another, can be drastically improved by making the ferromagnetic metal film and the protective film from an aggregate of columnar particles at angles of inclination in the longitudinal direction to the normal line to the non-magnetic substrate, respectively, while preventing formation of the highly inclined columnar particles in the protective film. ie wherein the maximum angle of inclination, to the line normal to the non-magnetic substrate, of the aggregate of columnar particles in the protective film is 80°. The present invention is based on this finding. In this connection, the present inventors have found that, when the angles of inclination in the longitudinal direction of the columnar particles in the ferromagnetic metal film and the protective film are continuously changed to the normal line to the non-magnetic substrate, that is, when the columnar particles take an arc configuration, more remarkable improvement of corrosion resistance can be obtained.

In order to improve the spacing loss of a non-magnetic protective film, the present inventors have studied a protective film having a good corrosion resistance and a magnetic property by itself, and have found that protective films based on iron-oxygen system such as $Fe_3O_4$, $\gamma$-$Fe_2O_3$, etc. have these characteristics, but still have such a disadvantage as poor wearing resistance, that is, the protective films will be worn out through contact with a magnetic head. As a result of further studies on improvement of the wearing resistance of the protective film without deteriorating the characteristics of the protective film based on iron-oxygen system, the present inventors have found that the protective film can have distinguished corrosion resistance, wearing resistance and recording-reproducing characteristics by adding nickel to the iron-oxygen system and further that the corrosion resistance can be much more improved by adding chromium thereto.

It is preferred that the protective film is based on a nickel-iron-oxygen system and more preferably that the protective layer is based on a nickel-iron-chromium-oxygen system. Furthermore, a protective film based on nickel-iron-oxygen system is formed on the ferromagnetic metal film on the non-magnetic substrate, and a lubricating layer comprising, for example, an aliphatic lubricant is further formed on the protective film. Still furthermore, a protective film based on nickel-iron-chromium-oxygen system is formed on the ferromagnetic metal layer, and further a lubricant layer comprising, for example, an aliphatic lubricant is further provided on the protective film.

The present inventors have further studied the magnetic recording medium, and have found that a magnetic recording medium having a good corrosion resistance can be obtained by providing a cobalt

EP 0 274 437 B1

passivation layer on the ferromagnetic metal film containing Co as the main component and further providing a protective film on the cobalt passivation layer, where the cobalt passivation layer can prevent diffusion of cobalt atoms from the ferromagnetic metal layer into the protective film.

Fig. 1 is a schematic view of one example of an apparatus for continuous oblique vapor deposition for use in the preparation of a magnetic recording medium according to the first aspect of the present invention.

Fig. 2 is a partially enlarged cross-sectional schematic view of the structure of a magnetic tape obtained in Example 1.

Fig. 3 is a partially enlarged cross-sectional schematic view of the structure of a magnetic tape obtained in Example 6.

Fig. 4 is a partially enlarged cross-sectional schematic view of the structure of another magnetic recording medium according to the first aspect of present invention.

Fig. 5 is a partially enlarged cross-sectional schematic view of the structure of other magnetic recording medium according to the first aspect of the present invention.

Fig. 6 is a partially enlarged cross-sectional schematic view of the structure of a magnetic tape obtained in Example 10.

Fig. 7 is a partially enlarged cross-sectional schematic view of the structure of a magnetic tape obtained in Example 11.

Fig. 8 is a partially enlarged cross-sectional schematic view of the structure of a magnetic tape obtained in Example 12.

Fig. 9 is a partially enlarged cross-sectional schematic view of the structure of a magnetic tape obtained in Example 14.

Fig. 10 is a partially enlarged cross-sectional schematic view of the structure of a magnetic tape obtained in Comparative Example 2.

Fig. 11 is a schematic view of a vacuum vapor deposition apparatus for producing a magnetic recording medium according to the second aspect of the present invention.

Fig. 12 is a partially enlarged cross-sectional schematic view of the structure of a magnetic recording medium according to the second aspect of the present invention.

Fig. 13 is a characteristic diagram showing the corrosion resistance.

Fig. 14 is a characteristic diagram showing the wearing resistance.

Fig. 15 is a characteristic diagram showing the reproduction output power.

Fig. 16 is a total characteristic diagram.

Fig. 17 is a partially enlarged cross-sectional schematic view of the structure of another magnetic recording medium according to the second aspect of the present invention.

Fig. 18 is a partially enlarged cross-sectional schematic view of a magnetic recording medium according to the third aspect of the present invention.

Fig. 19 is a schematic view of one example of a vacuum vapor deposition apparatus for preparing a magnetic recording medium according to the third aspect of the present invention.

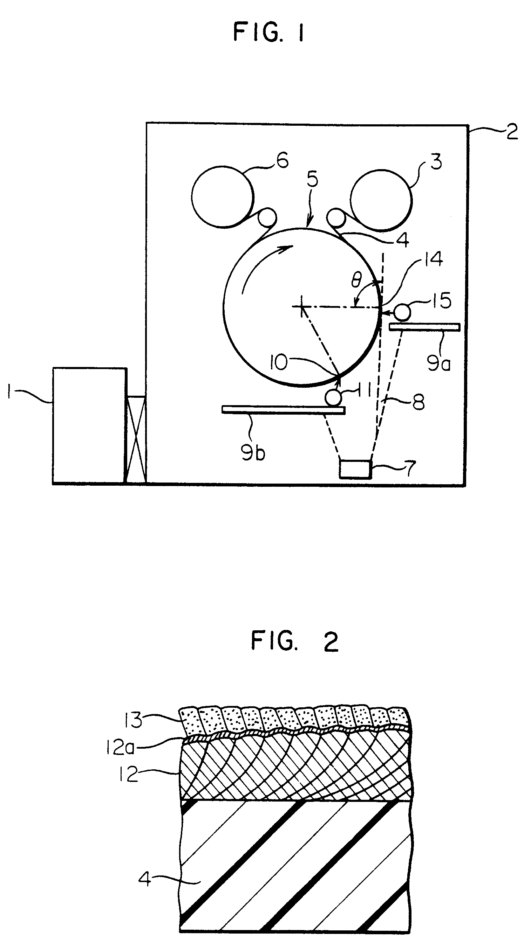

The magnetic recording medium according to the first aspect of the present invention can be prepared in an apparatus for continuous oblique vapor deposition, shown in Fig. 1.

In Fig. 1, the inside of a vacuum chamber 2 is adjusted to a predetermined pressure by a vacuum pumping system 1. A synthetic resin film substrate 4 is set to an unwinding roll 3 in the vacuum chamber 2, made to run along a cooling drum 5, and wound up onto a winding roll 6, while a ferromagnetic metal for forming a ferromagnetic metal film or a metal for forming a protective film, placed in a crucible 7, is evaporated to generate a vapor stream 8. The incident angle $\theta$ of the vapor stream is limited to a range of 0° to 90° by deposition-masking plates 9a and 9b, and a ferromagnetic metal film or a protective film is formed from the vapor stream, while injecting an oxygen gas stream from a gas inlet 11 or 15 or both towards the site at the minimum incident angle 10 or the site at the maximum incident angle 14 or both.

When the deposition-masking plate 9a is made to approach the deposition-masking plate 9b, the site at the maximum incident angle 14 approaches the site at the minimum incident angle 10, and columnar particles 13 of protective film can be formed in the so-called "cylindrical shape of equal diameter", whereby formation of columnar particles at high angles of inclination in the resulting protective film is prevented, as shown in Figs. 2 to 5, where numeral 4 shows a non-magnetic substract and 12 columnar particles in the ferromagnetic metal film.

The angle of inclination of columnar particles that constitute the ferromagnetic metal film and that of columnar particles that constitute the protective film can be in the same direction or in the opposite direction to each other, and are preferably in the opposite direction to each other, because, when the angles of inclination in the longitudinal direction of columnar particles in the ferromagnetic metal film and the

3

protective film to the normal line to the non-magnetic substrate are opposite to each other, the defects, for example, voids, formed on the ferromagnetic metal film due to the self-shadowing effect are readily covered by the protective film. The coverage by the protective film can be increased by adjusting the angles of inclination in the longitudinal directions of the columnar particles in the ferromagnetic metal film and the protective film to the normal line to the non-magnetic substrate, whereby the corrosion resistance can be increased. With the increasing coverage by the protective film, a layer of a lubricant or an anti-corrosion agent can be uniformly formed on the protective film, whereby the corrosion resistance can be further improved.

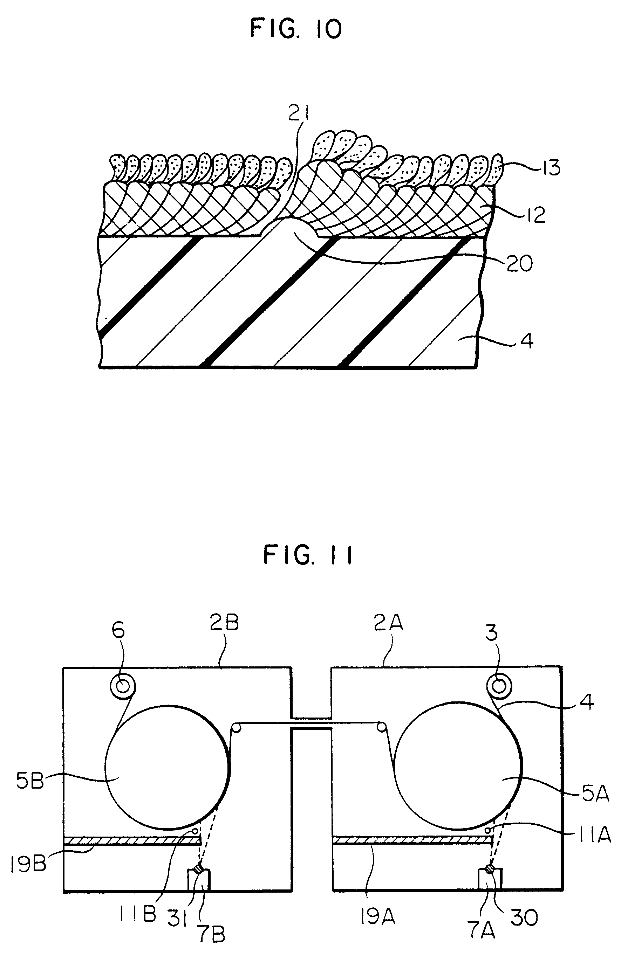

Particularly, when columnar particles 12 of ferromagnetic metal film are formed on the non-magnetic substrate 4 having a projection 20 on the surface, a void 21 is formed adjacent to the projection 20, as shown in Fig. 10. Even if columnar particles 13 of protective film are laid on the columnar particles 12 of ferromagnetic metal film, it is difficult to cover the void 21 with the protective film, in case that the growth direction of columnar particles of ferromagnetic metal film and that of protective film are identical with each other, and moisture enters the void and has a chance to corrode the ferromagnetic metal film. Thus, it is preferable particularly in case of a non-magnetic substrate having projections on the surface, the angles of inclination in the longitudinal direction of columnar particles in the ferromagnetic metal film and protective film to the normal line to the non-magnetic substrate are opposite to each other.

When the angles of inclination in the longitudianl direction of columnar particles in the ferromagnetic metal film and protective film to the normal line to the non-protective substrate are opposite to each other, the angle of inclination in the longitudinal direction of columnar particles in the ferromagnetic metal film to the normal line to the non-magnetic substrate is made to be 40° to 90°, preferably 40° to 75°, whereas the angle of inclination in the longitudinal direction of columnar particles in the protective film to the normal line to the non-magnetic substrate is made opposite to that of the columnar particles in the ferromagnetic metal film, and is made to be 0° to 80°, preferably 40° to 75°. These two angles of inclination can be adjusted by moving the deposition-masking plates 9a and 9b.

The non-magnetic substrate, which may have projections on the surface and can be used in the present magnetic recording medium, includes, for example, ordinary plastic films such as polyethylene terephthalate film, polyimide film, polyamide film, etc. which are coated with a mixture of particles of silicon, silicon compounds, graphite, copper, zinc, molybdenum disulfide, etc. with an appropriate solvent or resin, or coated with a curable resin, which contains particles of silicon, silicon compounds, copper, zinc, molybdenum disulfide, etc. The foregoing non-magnetic substrates which may have projections on the surface are commercially available and have ready access to everyone. Needless to say, the ordinary plastic films having no projections on the surface, such as polyethylene terephthalate film, polyimide film, polyamide film, etc. can be also used as the non-magnetic substrate for the present magnetic recording medium.

Materials for forming the ferromagnetic metal film in the present magnetic recording medium includes, for example, simple Co metal or alloys containing Co as the main component, such as Co-Ni, Co-Ni-Cr, Co-Cr, Co-Mn Co-Pt, Co-Fe, etc. Simple Fe metal, Fe alloy or other ferromagnetic metals can be also used.

It is preferable that the outer surfaces of columnar particles that constitute the ferromagnetic metal film are covered with an oxide layer of the ferromagnetic metal. Particularly in case of using Co as the ferromagnetic metal, it is preferable to provide a Co passivation layer having a thickness of 10 to 200 Å at the position near the upper ends of the columnar particles of ferromagnetic metal film. The Co passivation layer includes layers of oxides or hydrated oxides of at least trivalent Co, such as $Co_3O_4$, $Co_2O_3$, $Co_3O_4$-$nH_2O$ and $Co_2O_3$-$nH_2O$. Particularly, amorphous hydrated oxide has a good anti-corrosion effect. The amorphous hydrated oxide layer can be formed by leaving the ferromagnetic metal film to stand in an atmosphere at a high temperature and a high humidity for a given time.

Materials for forming the protective film in the present magnetic recording medium include, for example, simple Ni metal, Ni alloys such as Ni-Fe, Ni-Cr, Ni-Fe-Cr, simple Cr metal, and Cr alloys. Ni has a higher corrosion resistance than that of Co, and can form an effective protective film against the corrosive gases and also a good wearing resistance can be obtained.

Particularly, when Fe is added to Ni in an atomic ratio of Ni/(Ni + Fe) of 0.40 to 0.95, the corrosion resistance can be further improved. Furthermore, the protective film is formed by vapor deposition while injecting an oxygen gas to the vapor deposits, and thus the protective film contain oxygen. An atomic ratio of O/(Ni + Fe + O) is preferably 0.1 to 0.50. Below an oxygen concentration of 10% by atom, the protective film turns soft, whereas above 50% by atom, the protective film turns brittle and the wearing resistance is lowered.

Preferable material for forming the protective film is a Ni-Fe-Cr alloy, and a magnetic recording medium having good corrosion resistance and wearing resistance can be obtained by keeping an atomic ratio of Ni/-

(Ni + Fe + Cr) within a range of 0.4 to 0.92, an atomic ratio of Fe/(Ni + Fe + Cr) within a range of 0.05 to 0.57, and an atomic ratio of Cr/(Ni + Fe + Cr) within a range of 0.03 to 0.30. In this case, oxygen is contained in the protective film, and thus an atomic ratio of O/(Ni + Fe + Cr + O) must be kept within a range of 0.10 to 0.50. When the atomic ratio of O/(Ni + Fe + Cr + O) is kept within the range of 0.10 to 0.50, hard oxides and tough metals are appropriately mixed in the protective film, giving a satisfactory wearing resistance. If the atomic ratio of O/(Ni + Fe + Cr + O) is less than 0.10, the protective film turns too soft and the durability is lowered, whereas, if the atomic ratio exceeds 0.50, the protective film becomes brittle.

A protective film, in which the atomic ratio of Ni/(Ni + Fe + Cr) is kept within a range of 0.4 to 0.92, has a satisfactory wearing resistance. When the atomic ratio of Ni/(Ni + Fe + Cr) is less than 0.4, no satisfactory wearing resistance is obtained, even if the atomic ratio of oxygen is kept within said range.

Furthermore, a protective film, in which the atomic ratio of Fe/(Ni + Fe + Cr) is kept within the range of 0.05 to 0.57, has a better corrosion resistance. If the atomic ratio of Fe/(Ni + Fe + Cr) is less than 0.05, the corrosion resistance cannot be thoroughly increased, whereas, if the atomic ratio exceeds 0.57, the contents of Ni and Cr are decreased, deteriorating the wearing resistance.

Furthermore, a protective film, in which the atomic ratio of Cr/(Ni + Fe + Cr) is kept within the range of 0.03 to 0.3, has a better corrosion resistance. If the atomic ratio of Cr/(Ni + Fe + Cr) is less than 0.03, the corrosion resistance is a problem, whereas, if the atomic ratio exceeds 0.3, the wearing resistance is deteriorated.

It is preferable that the protective film is rich in oxygen on at least one of the outer surface side of the protective film and the boundary side of the protective film to the ferromagnetic metal film. It is more preferable that the protective film is rich in oxygen on both outer surface side and the boundary side. In order to make the outer surface side of protective film rich in oxygen, an oxygen gas is injected onto the protective film formation-finished parts at the last stage of forming the protective film from vapor stream. In order to make the boundary side of the protective film to the ferromagnetic metal film rich in oxygen, the oxygen gas is injected onto the protective film formation-initiated parts at the initial stage of forming the protective film from the vapor stream.

In the formation of a ferromagnetic metal film, an oxygen gas is generally injected onto the site at the minimum incident angle to obtain a ferromagnetic metal film with a high coercive force. When an oxygen gas is also injected onto the protective film formation-initiated parts at the initial stage of forming the protective film in that case, both film surface parts existing on the boundary sides of the ferromagnetic metal film and the protective film become rich in oxygen, whereby an abrupt change in the oxygen concentration at the film surface parts on the boundary sides of the ferromagnetic metal film and the protective film can be prevented thereby. Thus, the oxygen concentration can be substantially uniform on the boundary sides of ferromagnetic metal film and protective film. That is, both films can be laminated in a chemically stable state, showing characteristics of anti-corrosion metal proper and considerably improving the corrosion resistance of a magnetic recording medium.

When the protective film is rich in oxygen on its outer surface, a resistance to corrosive gases is increased.

The thickness of protective film is preferably in a range of 50 to 500 Å. Below 50 Å, the protective film is hard to cover the defects in the ferromagnetic metal film, whereas above 500 Å the output power deterioration becomes too remarkable at the recording-reproduction. This is not practical.

The compositions of ferromagnetic metal film and protective film can be determined by carrying out depth profile analysis according to Auger electron spectroscopy and calculating their averages.

The ferromagnetic metal film and protective film can be formed by any known procedure such as vapor deposition, sputtering, CVD, ion plating, etc., but in order to satisfy the first aspect of the present invention, it is preferable to form the ferromagnetic metal film and protective film with aggregates of columnar particles, for example, by known continuous oblique vapor deposition, etc.

In order to further improve the runnability and corrosion resistance, it is preferable to coat the protective film with at least one of a lubricant and an anti-corrosion agent. The order of coating is not particularly limited, and coating can be carried out directly or indirectly, for example, by transfer procedure.

The lubricant for use in the present invention includes, for example, an aliphatic lubricant, a fluorocarbon lubricant, a silicone lubricant, a hydrocarbon lubricant, etc.

The aliphatic lubricant includes, for example, fatty acids, metal salts of fatty acids, fatty acid esters, fatty acid amides, aliphatic alcohols, etc. The fatty acids include, for example, lauric acid, myristic acid, palmitic acid, oleic acid, stearic acid, behenic acid, etc. Their metal salts include, for example, magnesium salts, aluminum salts, lithium salts, sodium salts, calcium salts, iron salts, cobalt salts, zinc salts, barium salts, lead salts, etc.

The fatty acid esters include, for example, butyl stearate, octyl myristate, stearic acid monoglyceride, palmitic acid monoglyceride, oleic acid monoglyceride, etc.

The fatty acid amides include, for example, caproic acid amide, lauric acid amide, palmitic acid amide, behenic acid amide, oleic acid amide, linoleic acid amide, methylenebisstearic acid amide, etc.

The aliphatic alcohols include, for example, stearyl alcohol, myristyl alcohol, etc.

In addition to the above, chlorides such as trimethylstearylammonium chloride, stearoyl chloride, etc., and amines such as stearylamine, stearylamine acetate, stearylamine hydrochloride, etc. can be used in the present invention.

The fluorocarbon lubricant includes, for example, trichlorofluoroethylene, perfluoropolyether, perfluoroalkylpolyether, perfluoroalkylcarboxylic acid, etc. More specifically, their commercially available products include, for example, Daifulon #20 (a trademark of product made by Daikin Kogyo K. K., Japan), Krytox M, Krytox H and Vydax AP (trademarks of products produced by DuPont, USA), Fomlin Z-DOL, Z-25, Z-DIAC, Z-DISOC, Z-AM2001, etc. (trademarks of products produced by Monte-Edison, Italy).

The silicone lubricant includes, for example, silicone oil, modified silicone oil, etc.

The hydrocarbon lubricant includes, for example, paraffin, squalane, wax, etc.

The anti-corrosion agent can be used together with the lubricant in a mixture, or can be applied independently. The anti-corrosion agent includes, for example, linear amine compounds, cyclic amine compounds, amide compounds, amine salts, esters, etc.

The linear amine compounds include, for example, oleylamine, N-methyloctadecylamine, oxyethylenedodecylamine, etc.. The cyclic amine compounds include, for example, benzimidazole, 2-aminobenzimidazole, 2-mercaptobenzimidazole, 5-chlorobenzimidazole, 5-nitrobenzimidazole, benzotriazole, 5-nitrobenzotriazole, 5-chlorobenzotriazole, benzotriazole fatty acid salt, nitrosonaphthol, etc.

The amide compounds include, for example, lauric acid amide, stearic acid amide, oleic acid amide, etc. The amine salts include, for example, octadecylamine acetate, alkylpropylenediamine acetate, etc.

The esters include, for example, sorbitan monopalmitate, etc. Furthermore, phenol-based, amine-based, phosphorus-based, sulfur-based, organic acid-based and quinone-based anti-corrosion agents such as butylhydroxyanisol, dibutylhydroxytoluene, benzotriazole, benzotriazolelaurylamine, hydroquinone, dimethylaminoethylene methacrylate, triphenyl phosphite, tridecyl phosphite, trilauryl trithiophosphite, butyl phosphate, dilauryl thiodipropionate, sorbitol, propylene glycol, etc.

The thickness of the layer of the lubricant or anti-corrosion agent or total thickness of both layers is preferably in a range of 50 to 500 Å.

The present magnetic recording medium can be used, for example, as a magnetic tape, a magnetic disc, a magnetic card, etc.

The present invention will be described in detail below, referring to Examples.

Example 1

A magnetic recording medium was prepared in an apparatus for continuous oblique vapor deposition, as shown in Fig. 1.

A substrate 4 of commercially available polyethylene terephthalate film (thickness: 8 $\mu$m) was set on a unwinding roll 3 in a vacuum chamber evacuated to $4 \times 10^{-6}$ Torr by a vacuum pumping system 1, and was made to run along a cooling drum 5 and wounded up onto a winding roll 6, while evaporating $Co_{80}Ni_{20}$ placed in a crucible 7 by heating to generate a CoNi vapor stream 8, keeping the incident angle $\theta$ of the vapor stream within a range of 90° to 50° by deposition-masking plates 9 and injecting an oxygen gas toward the site at the minium incident angle 10 from an inlet 11, thereby forming a ferromagnetic metal film 12 of Co-Ni-O (64 at.%Co : 16 at.%Ni : 20 at.%O) having a thickness of 1,500 Å on the substrate 4 in the atmosphere under a pressure of $2 \times 10^{-4}$ Torr. The substrate 4 was wound onto the winding roll 8 to obtain a primary film A.

Then, the primary film A was left standing in a tank kept at a constant temperature of 60°C and a constant humidity of 10% RH for one month to form an amorphous passivation layer 12a of $Co_2O_3 \cdot nH_2O$ having a thickness of 50 Å on the surface of the ferromagnetic metal film, as shown in Fig. 2.

Then, the primary film A was set on the unwinding roll 3 again, and made to run in the same direction as that when the ferromagnetic metal film was formed, whereby a protective film 13 was formed on the ferromagnetic metal film 12. In order to form the protective film 13, $Ni_{80}Fe_{20}$ was placed in the crucible 7 and the incident angle $\theta$ was set to 60° - 45°, while the oxygen gas was injected onto the site at the maximum incident angle 14 as the protective film formation-initiated part only from an oxygen inlet 15. The protective film 13 of Ni-Fe-O (42.4 at.%Ni - 10.6 at.%Fe - 47 at.%O) having a thickness of 150 Å was formed on the amorphous passivation layer 12a in the atmosphere under a pressure of $1 \times 10^{-4}$ Torr.

In this manner, a magnetic tape having a cross-sectional structure shown in Fig. 2 was obtained.

Whenever the amorphous passivation layer was formed in the following Examples, depiction of the amorphous passivation layer 12a was omitted from the drawings.

Example 2

A magnetic tape was prepared in the same manner as in Example 1 except that Ni-Fe-Cr (68-17-15% by atom) was used as a material for forming the protective film. The thus obtained protective film had a composition of Ni-Fe-Cr-O (36 at.%Ni-9 at.%Fe-7.9 at.%Cr-47.1 at.%O).

Example 3

A magnetic tape was prepared in the same manner as in Example 1, except that Ni was used as a material for forming the protective film. The thus obtained protective film had a composition of Ni-O (53 at.%Ni-47 at.%O).

Example 4

A magnetic tape was prepared in the same manner as in Example 1, except that the protective film was formed in an atmosphere under a pressure of $1 \times 10^{-4}$ Torr while injecting the oxygen gas onto the protective film formation-finished part from the oxygen inlet 11 at the final stage of forming the protective film.

Example 5

A magnetic tape was prepared in the same manner as in Example 1, except that the protective film was formed in an atmosphere under a pressure of $4 \times 10^{-4}$ Torr while injecting the oxygen gas onto the protective film formation-initiated part and the protective film formation-finished part from the oxygen inlets 15 and 11, respectively, when the protective film was formed.

Example 6

The primary film A wound up on the winding roll 6 in Example 1 was forwarded as such in a reversed direction by reversing the running direction and subjected to formation of a protective film on the primary film A, while winding up the film on the unwinding roll 3. The protective film 13 was formed under a pressure of $1 \times 10^{-4}$ Torr while injecting an oxygen gas onto the part at the minimum incident angle 10 as the protective film formation-initiated part only from the oxygen inlet 11.

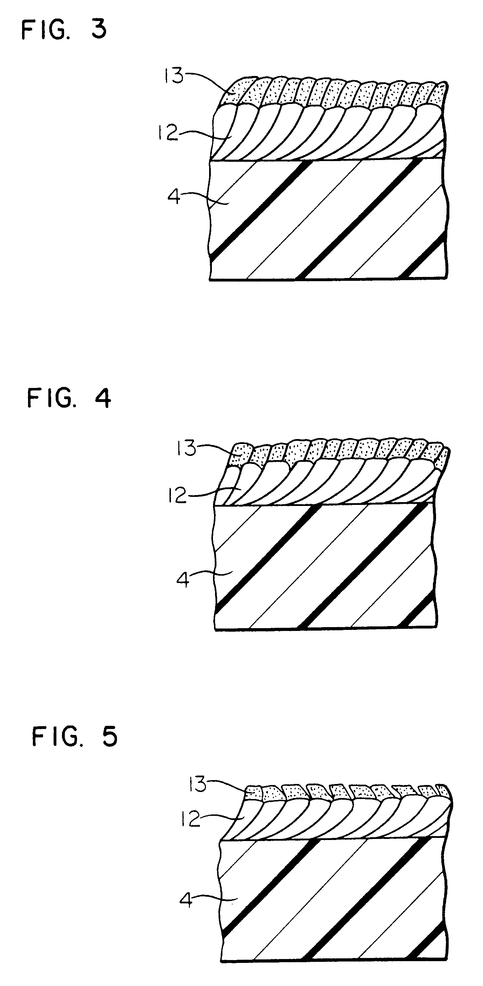

A magnetic tape having a cross-sectional structure as shown in Fig. 3 was obtained.

Example 7

A magnetic tape was prepared in the same manner as in Example 1, except that the incident angle of the vapor stream was limited to 45°-80° by the deposition-masking plates 9a and 9b when the protective film was formed.

Example 8

A magnetic tape was prepared in the same manner as in Example 1, except that the incident angle of the vapor stream was limited to 20°-60° by the deposition-masking plates 9a and 9b when the protective film was formed.

Example 9

A magnetic tape was prepared in the same manner as in Example 1, except that no oxygen gas was injected when the protective film was formed. The thus formed protective film had a composition of Ni-Fe (80 at.%Ni-20 at.%Fe).

7

Comparative Example 1

A magnetic tape was prepared in the same manner as in Example 1, except that the incident angle of the vapor stream was limited to 45°-90° by the deposition-masking plates 9a and 9b when the protective film was formed.

The magnetic tapes obtained in Examples 1 to 9 and Comparative Example 1 were left standing in an stmosphere containing 1.0 ppm $SO_2$ at 35°C and 75% RH for 100 hours to conduct corrosion tests. Corrosion resistance was evaluated by subjecting the samples to XMA analysis (type EDAX9100, trademark of Philips, Netherlands) to determine the content of sulfur (% by atom) in 2 x 2 $mm^2$. Results of measurement are shown in Table 1.

## Table 1

| | Sulfur content (at%) |
|---|---|
| Example 1 | 8 |
| " 2 | 6 |
| " 3 | 10 |
| " 4 | 8 |
| " 5 | 7 |
| " 6 | 10 |
| " 7 | 10 |
| " 8 | 6 |
| " 9 | 20 |
| Comp. Ex. 1 | 35 |

As is obvious from the results shown in Table 1, the magnetic tapes according to the present invention have improved corrosion resistances.

In Examples 1 to 9, the magnetic tapes having the cross-sectional structures shown in Figs. 2 and 3 were obtained, but by adjusting the running direction of the substrate film and the primary film, magnetic tapes having cross-sectional structure as shown in Figs. 4 and 5 could be obtained, where similar effect could be obtained on the improvement of corrosion resistance. Furthermore, whenever the incident angle of the vapor stream was kept same during the formation of the ferromagnetic metal film and the protective film, the similar effect could be obtained on the improvement of corrosion resistance.

Example 10

A commercially available polyethylene terephthalate film having a thickness of 8 $\mu$m and 30 x $10^6$ projections, 200 Å in height, per $mm^2$ on the surface, was used as a non-magnetic substrate having projections on the surface and subjected to formation of a ferromagnetic metal film and a protective film thereon in the same manner as in Example 1 to prepare a magnetic recording medium.

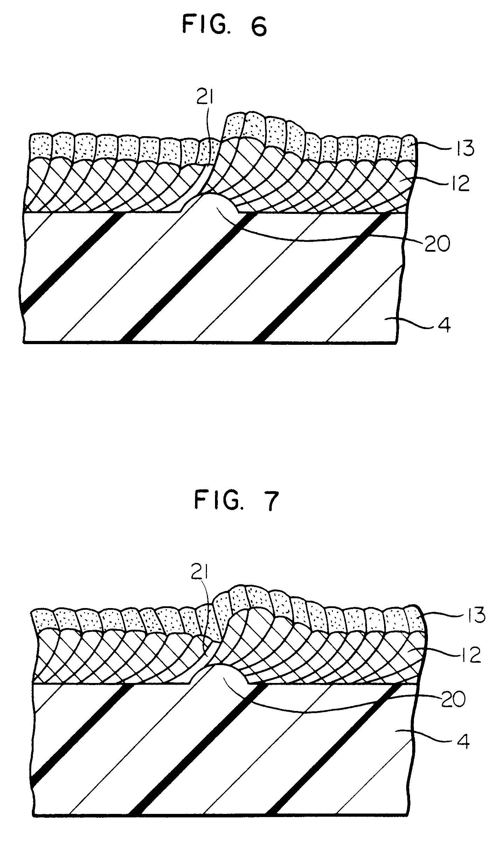

During the formation of the protective film, the substrate was moved while limiting the incident angle of vapor stream to 40°-60° by the deposition-masking plates 9a and 9b so that the aggregates of columnar particles in the protective film can be inclined in the same direction as those in the ferromagnetic metal film, and while injecting an oxygen gas onto the protective film formation-initiated part and the protective film formation-finished part. The resulting protective film was composed of aggregates of columnar particles which were inclined at 40°-60° in the longitudinal direction to the normal line to the substrate and formed on the ferromagnetic metal film. The thus obtained long magnetic recording medium had a cross-sectional structure as shown in Fig. 6, where numeral 21 shows a void and 20 a projection.

8

Example 11

A long magnetic recording medium having a cross-sectional structure as shown in Fig. 7 was prepared in the same manner as in Example 10, except that a protective film composed of aggregates of columnar particles at an angle of inclination of 40°-60° on the ferromagnetic metal film was formed by moving the primary film so that the aggregates of columnar particles in the protective film can be inclined in an opposite direction to that of the aggregates of columnar particles in the ferromagnetic metal film.

Example 12

A long magnetic recording medium having a cross-sectional structure as shown in Fig. 2 was prepared in the same manner as in Example 11, except that the indicent angle of the vapor stream was limited to 40°-60° when the ferromagnetic metal film was formed, so that the ferromagnetic metal film composed of aggregates of columnar particles at an angle of inclination of 40° to 60° in the longitudinal direction to the normal line to the substrate was formed on the substrate.

Example 13

A long magnetic recording medium was prepared in the same manner as in Example 11, except that the oxygen gas was injected only onto the protective film formation-initiated part when the protective film was formed.

Example 14

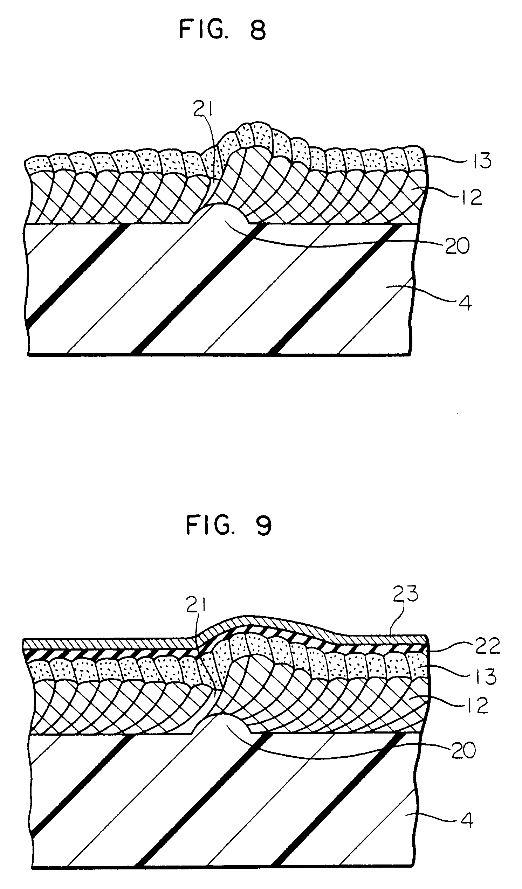

A long magnetic recording medium was prepared in the same manner as in Example 11 and then subjected to formation of an anti-corrosion agent layer 22 on the protective film 13 by applying a 0.1 wt.% MIBK solution of 5-nitrobenzotriazole as an anti-corrosion agent to the protective film 13, followed by drying, and to formation of a lubricant layer 23 on the anti-corrosion agent layer 22 by applying a 1 wt.% FC77 (fluorocarbon solvent) solution of Fomblin Z-AM2001 as a lubricant to the anti-corrosion agent layer 22, followed by drying, whereby a long magnetic recording medium having a cross-sectional structure as shown in Fig. 9 was obtained.

Example 15

A long magnetic recording medium was prepared in the same manner as in Example 14, except that no lubricant was applied.

Comparative Example 2

A long magnetic recording medium having a cross-sectional structure as shown in Fig. 10 was prepared in the same manner as in Example 10, except that a protective film composed of aggregates of columnar particles at an angle of inclination of 50° to 90°, that is, those including the columnar particles at a high angle of inclination, was formed on the ferromagnetic metal film, while moving the primary film so that the aggregates of columnar particles in the protective film can be inclined in the same direction as those in the ferromagnetic metal film.

Comparative Example 3

A long magnetic recording medium was prepared in the same manner as in Example 10, except that no oxygen gas was injected during the formation of the protective film.

The long magnetic recording media obtained in Examples 10 to 16 and Comparative Examples 2 and 3 were subjected to evaluation of the corrosion resistance and wearing resistance. The corrosion resistance was evaluated in the same manner as described before. The wearing resistance was evaluated by cutting the samples into tape forms and measuring a still life time in minutes in a commercially available VTR of VHS system, operated in the still mode until the still picture disappeared. That is, the still life time was used as a means for evaluating the wearing resistance. The results of measurements are shown in Table 2.

## Table 2

| Sample | Sulfur content (at%) | Still life time (min) |
|---|---|---|
| Example 10 | 23 | >60 |
| " 11 | 15 | >60 |
| " 12 | 9 | >60 |
| " 13 | 10 | >60 |
| " 14 | 3 | >60 |
| " 15 | 8 | >60 |
| " 16 | 5 | >60 |
| Comp. Ex. 2 | 53 | 35 |
| " 3 | 45 | <1 |

As is obvious from the foregoing results, the voids generated when a ferromagnetic metal film is formed on a non-magnetic substrate having projections on the surface can be effectively covered by a protective film, and the corrosion resistance and the wearing resistance are considerably improved in the present magnetic recording medium. In case of the magnetic recording medium shown in Comparative Example 2, the void generated adjacent to the projection on the substrate is not covered by the protective film, and thus a corrosive gas enters the void from the surface of the protective film and the ferromagnetic metal film is vigorously corroded.

As described above, a magnetic recording medium with distinguished corrosion resistance and wearing resistance can be obtained according to the first aspect of the present invention. The first aspect of the present invention can give a distinguished effect on the improvement of the corrosion resistance and the wearing resistance of a magnetic recording medium comprising an non-magnetic substrate having projections on the surface.

Examples 17 to 35 and Comparative Example 4

Fig. 11 is a schematic view of an apparatus for vacuum vapor deposition for preparing a magnetic recording medium according to the present invention.

The apparatus shown in Fig. 11 consisted of two units, a substrate of polyethylene terephthalate 4 having a thickness of 12 μm was forwarded from an unwinding roll 3 and made to run along a cooling drum 5A having a diameter of 60 cm in a first vacuum chamber 2A. A ferromagnetic metal 30 of Co-Ni alloy containing 20% by weight of nickel was placed in a crucible 7A as a vapor source. The first vacuum chamber 2A was evacuated to a pressure of $5.0 \times 10^{-6}$ Torr by a vacuum pumping system (not shown on the drawing), and the ferromagnetic metal was evaporated by heating, and the resulting vapor stream was made to hit the substrate 4 at a minimum incident angle of 50° and a vapor deposition rate of 800 Å/second. A ferromagnetic metal film 12 of cobalt-nickel alloy was formed on the substrate 4 while injecting an oxygen gas onto the substrate passing over the site at the minimum incident angle from an oxygen inlet 11A.

Successively, the substrate 4 was led to a second vacuum chamber 2B and made to run along a cooling drum 5B, and wound up onto a winding roll 6. An alloy 31 of Ni-Fe or Ni-Fe-Cr for a protective film was placed in a crucible 7B as a vapor source. The second vacuum chamber 2B was evacuated to a pressure of $5.0 \times 10^{-6}$ Torr by a vacuum pumping system (not shown on the drawing), and the alloy 31 for the protective film was evaporated by heating and the resulting vapor stream was made to hit the ferromagnetic metal film 12 at a minimum incident angle of 65° by oblique incidence vapor deposition. A protective film 13 was formed on the ferromagnetic metal film 12 while injecting an oxygen gas onto the ferromagnetic metal film 12 on the substrate 4 passing over the site at the minimum incident angle on the cooling drum 5B from the oxygen inlet 11B. Numerals 19A and 19B show deposition-masking plates, respectively.

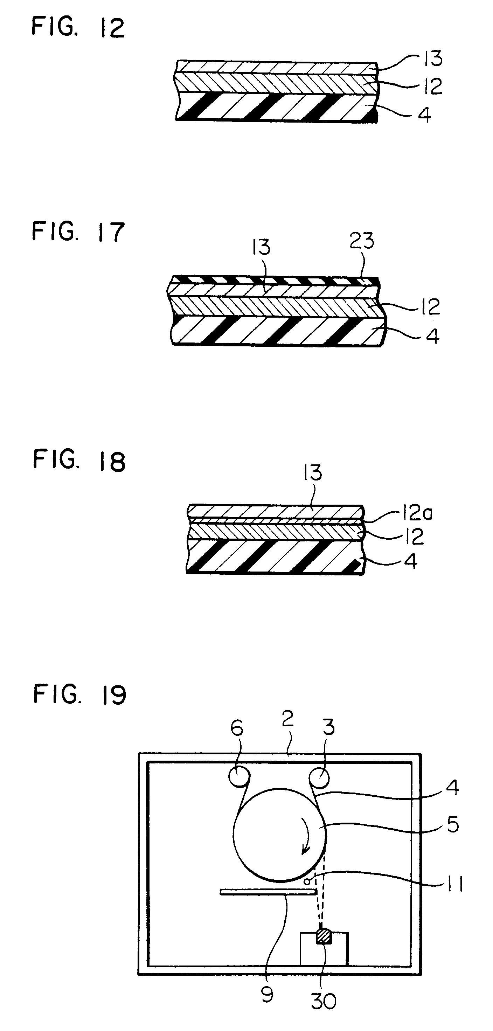

Fig. 12 shows the enlarged cross-sectional view of the thus prepared magnetic recording medium, where the ferromagnetic metal film 12 having a thickness of 1,500 Å, composed of aggregates of columnar particles of cobalt-nickel alloy in an inclined state was formed on the substrate film 4, and the protective film 13 having a thickness of 200 Å, composed of aggregates of columnar particles of nickel-iron alloy or nickel-iron-chromium alloy in an inclined state was formed on the ferromagnetic metal film 12. By preparing a magnetic recording medium by the apparatus for vacuum vapor deposition shown in Fig. 11, the direction of inclination of the columnar particles in the protective film 13 could be made to have the same direction of inclination of columnar particles in the ferromagnetic metal film 12.

The thickness of the ferromagnetic metal film 12 was preferably 500 to 2,000 Å, whereas that of the protective film 13 was preferably 30 to 1,000 Å. When the thickness of the protective film 13 was less than 30 Å, the thorough effect of the protective film could not be obtained, resulting in poor corrosion resistance, whereas, when the thickness of the protective film 13 exceeded 1,000 Å, the high density recording performance was lowered. Thus, the thickness of the protective film 13 was preferably limited to said range.

Compositions of the ferromagnetic metal film 12 and the protective film 13 were determined by depth profile analysis according to Auger electron spectroscopy and calculating their averages.

Magnetic tapes were prepared by forming a ferromagnetic metal film of cobalt-nickel alloy (80 wt.%Co-20 wt.%Ni) on polyethylene terephthalate films as substrate, and forming a protective film of nickel-oxygen or nickel-iron-oxygen thereon in the same manner as described above, or without formation of any protective film and subjected to determination of various characteristics as shown in the following Table 3.

In Table 3, Comparative Example 4 is a magnetic tape without the protective film, Examples 17 to 19 show magnetic tapes with protective films of nickel-oxygen, and Examples 20 to 28 show magnetic tape with protective films of nickel-iron-oxygen. In the column "oxygen atomic ratio", Examples 17 to 19 thus show an atomic ratio of $O/(Ni + O)$ and Examples 20 to 28 show an atomic ratio of $O/(Ni + Fe + O)$. Iron atomic ratio shows an atomic ratio of $Fe/(Ni + Fe)$.

The reproduction output power characteristics shows a reproduction output power value of a magnetic tape (Examples 17 to 28) with a protective film relative to that of the magnetic tape without any protective film (Comparative Example 4) as O dB when measured at the wavelength of 0.75 $\mu$m in a VTR of VHS system.

The still life time is determined in the same manner as described before.

Test 1 is a high temperature-high humidity test of leaving the magnetic tape standing at 60°C and 90% RH for one week, where reduction (%) in saturation magnetization after the test is shown in column a and evaluation of the surface state of magnetic tape by an optical microscope observation after the test is shown in column b.

Test 2 is a corrosive gas test of leaving a magnetic tape standing in an atmosphere containing 1PPM $SO_2$, 0.5PPM $H_2S$ and 1PPM $NO_2$ at 35°C and 75% RH for 24 hours, where reduction (%) in saturation magnetization after the test is shown in column a and evaluation of the surface state of magnetic tape by an optical microscope observation after the test is shown in column b.

In columns b in Tests 1 and 2, circle mark "o" means few corrosion, delta mark "△" means light corrosion and cross mark "X" means heavy corrosion.

Tabel 3

| | Oxygen atomic ratio | Iron atomic ratio | Reproduction output power (dB) | Still life time (min) | Test 1 | | Test 2 | |
|---|---|---|---|---|---|---|---|---|
| | | | | | a | b | a | b |
| Comp. Ex. 4 | – | – | 0 | 32 | 15 | x | 13 | x |
| Example 17 | 0.2 | – | –1.2 | >60 | 11 | ○ | 10 | x |
| Example 18 | 0.3 | – | –1.3 | >60 | 10 | ○ | 10 | x |
| Example 19 | 0.45 | – | –1.5 | >60 | 10 | ○ | 11 | x |
| Example 20 | 0.05 | 0.23 | –1.1 | 40 | 7 | Δ | 7 | Δ |
| Example 21 | 0.2 | 0.23 | –1.1 | >60 | 7 | ○ | 6 | ○ |
| Example 22 | 0.3 | 0.03 | –1.6 | >60 | 7 | ○ | 9 | Δ |
| Example 23 | 0.3 | 0.05 | –1.4 | >60 | 7 | ○ | 8 | ○ |
| Example 24 | 0.3 | 0.23 | –1.2 | >60 | 7 | ○ | 7 | ○ |
| Example 25 | 0.3 | 0.60 | –1.1 | >60 | 6 | ○ | 7 | ○ |
| Example 26 | 0.3 | 0.70 | –1.1 | 35 | 6 | ○ | 6 | ○ |
| Example 27 | 0.45 | 0.23 | –1.5 | >60 | 7 | ○ | 8 | ○ |
| Example 28 | 0.5 | 0.23 | –2.0 | 52 | 8 | ○ | 9 | ○ |

As is apparent from Table 3, a magnetic tape without any protective film (Comparative Example 4) had a shorter still life time, a large reduction (%) in the saturation magnetization in the high temperature-high humidity test (Test 1) and the corrosive gas test (Test 2), and corrosion on the tape surface was remarkable. By forming a protective film of nickel-oxygen on the surface of the ferromagnetic metal film (Examples 17 to 19), the still life time could be prolonged, but no better results were obtained in the high temperature-high humidity test (Test 1) and the corrosive gas test (Test 2), and particularly in the corrosive gas test, reduction in the saturation magnetization was large, corrosion on the tape surface was remarkable, resulting in poor corrosion resistance.

By forming a protective film of nickel-iron-oxygen on the ferromagnetic metal film on the other hand (Examples 20 to 28), the still life time was prolonged and better results were obtained in the high temperature-high humidity test (Test 1) and the corrosive gas test (Test 2) in most cases. Particularly when the oxygen atomic ratio, O/(Ni + Fe + O), was within a range of 0.1 to 0.45 and the iron atomic ratio, Fe/-(Ni + Fe), was within a range of 0.05 to 0.6, as in Examples 21, 23, 24, 25 and 27, a better durability, improved prevention of deterioration of recording-reproducing characteristics and distinguished corrosion resistance in both high temperature-high humidity condition and corrosive gas atmosphere could be obtained.

Various magnetic tapes were prepared in the same manner as above, except that protective films containing various contents of nickel, iron and chromium and a constant content of 25% by weight of oxygen were formed on the ferromagnetic metal film of cobalt-nickel alloy (80 wt.%Co-20wt.%Ni), and subjected to determination of corrosion resistance, wearing resistance and reproduction output power characteristics.

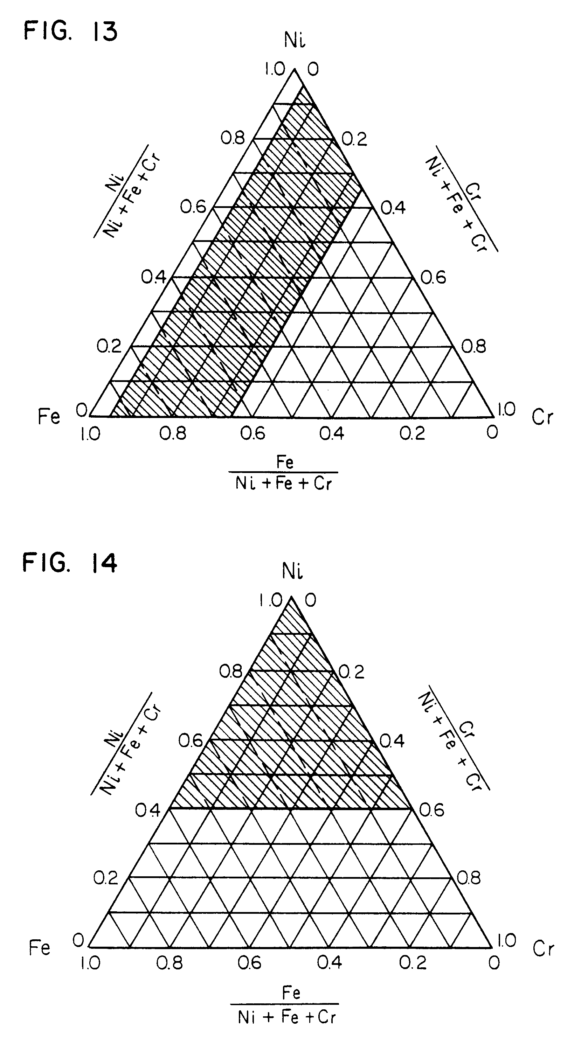

The corrosion resistance of the magnetic tape was determined by leaving the magnetic tape standing in a corrosive gas atmosphere containing 0.5 PPM $H_2S$, 1 PPM $NO_2$ and 1 PPM $SO_2$ at 35°C and 75% RH for 24 hours and investigating the reduction in saturation magnetization after the test. The results are shown in Fig. 13, where slant line portion shows an area of less than 7% reduction.

As is apparent from Fig. 13, a good corrosion resistance could be obtained at an atomic ratio, Cr/-(Ni + Fe + Cr), of 0.03 to 0.3.

The wearing resistance of the magnetic tape was determined by the still life test, using a VTR of VHS system and evaluated by way of still life time, as described before. The results are shown in Fig. 14, where the slant line portion shows a still life time of more than 60 minutes.

As is apparent from Fig. 14, a good wearing resistance could be obtained at an atomic ratio, Ni/-(Ni + Fe + Cr), of 0.4 - 1.0.

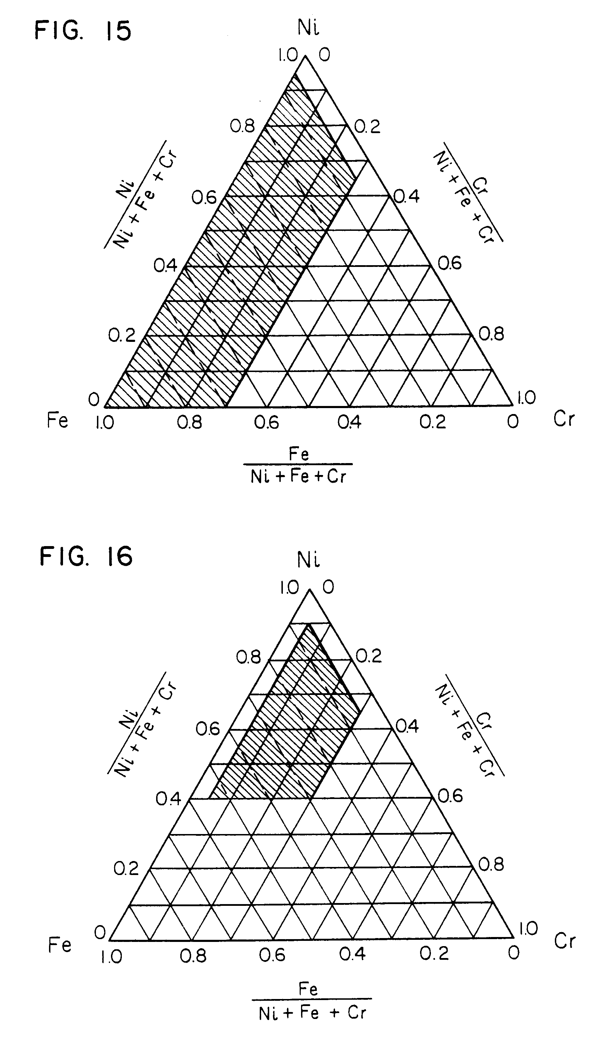

The reproduction output power characteristics of the magnetic tape was determined at a wavelength of 0.75 μm, using a VTR of VHS system. The results are shown in Fig. 15, where the slant line portion shows an area of reproduction output power of more than -1.0 dB relative to the reproduction output power of the magnetic tape without any protective film as 0 dB.

As is apparent from Fig. 15, good reproduction output power characteristics were obtained at an atomic ratio, Cr/(Ni + Fe + Cr) of 0.0 - 0.30 and at an atomic ratio, Fe/(Ni + Fe + Cr) of 0.05 - 1.0.

Fig. 16 shows the composition in an area having good corrosion resistance, wearing resistance and reproduction output power characteristics by summarizing the results of Figs. 13, 14 and 15.

As is apparent from Fig. 16, a magnetic recording medium having distinguished corrosion resistance, wearing resistance and reproduction output power characteristics can be obtained by keeping an atomic ratio, Ni/(Ni + Fe + Cr), within a range of 0.4 to 0.92, an atomic ratio, Fe/(Ni + Fe + Cr), within a range of 0.05 to 0.57, and an atomic ratio, Cr/(Ni + Fe + Cr) within a range of 0.03 to 0.3.

In the foregoing tests, various characteristics of magnetic tapes were measured by changing contents of nickel, iron and chromium of the protective film to various degrees, while keeping the content of oxygen constant (25% by atom) in the protective film.

Test results obtained by changing the content of oxygen in the protective film, while keeping Ni/-(Ni + Fe + Cr) at 0.76, Fe/(Ni + Fe + Cr) at 0.19 and Cr/(Ni + Fe + Cr) at 0.05 are shown in Table 4.

## Table 4

| Example No. | Oxygen atomic ratio | Reproduction output power (dB) | Still life time (min) | Test 1 | | Test 2 | |
|---|---|---|---|---|---|---|---|
| | | | | a | b | a | b |
| 29 | 0.00 | -1.1 | 5 | 6 | O | 7 | O |
| 30 | 0.05 | -1.2 | 48 | 7 | O | 7 | O |
| 31 | 0.10 | -1.3 | >60 | 7 | O | 7 | O |
| 32 | 0.20 | -1.3 | >60 | 7 | O | 8 | O |
| 33 | 0.30 | -1.5 | >60 | 8 | O | 8 | O |
| 34 | 0.45 | -1.6 | >60 | 8 | O | 9 | O |
| 35 | 0.50 | -2.0 | 52 | 8 | O | 9 | O |

On Table 4, the oxygen atomic ratio means a ratio of O/(Ni + Fe + Cr + O). The reproduction output power of the magnetic tape was determined by the same test under the same conditions as described before, referring to Fig. 15. The still life time of the magnetic tape was determined by the same tests under the same conditions as described before, referring to Fig. 14.

Test 1 is a high temperature-high humidity test of leaving the magnetic tape standing at 60°C and 90% RH for one week, where the reduction (%) in the saturation magnetization after the test is shown in column a and evaluation of the surface state of the magnetic tape by optical microscope observation after the test is shown in column b.

Test 2 is a corrosive gas test of leaving the magnetic tape standing in a corrosive gas atmosphere containing 1 PPM $SO_2$, 0.5 PPM $H_2S$ and 1 PPM $NO_2$ at 35°C and 75% RH for 24 hours, where the reduction (%) in the saturation magnetization after the test is given in column a and evaluation of the surface state of the magnetic tape by optical microscope observation after the test is given in column b. In column b of Tests 1 and 2, circle mark "O" means few corrosion, delta mark "Δ" means light corrosion, and cross mark "X" means heavy corrosion.

As is apparent from Table 4, the magnetic tapes whose atomic ratio, O/(Ni-Fe-Cr-O) was kept within a range of 0.10 to 0.45, (Examples 31 to 34) had better reproduction output power characteristics, wearing resistance and corrosion resistance than those of other magnetic tapes.

When a protective film of Ni-Fe-Cr-O whose atomic ratio, O/(Ni + Fe + Cr + O), was kept with the range of 0.10 to 0.45 was formed on a ferromagnetic metal film, a thorough wearing resistance could be given to the resulting magnetic tape, because hard oxides and tough metals were appropriately mixed in the protective film, as already described before. When the atomic ratio was less than 0.10, the protective film turned too soft, and there was a problem in the durability, whereas, when the atomic ratio exceeded 0.45, the protective film turned brittle and deterioration of the recording-reproducing characteristics could not be prevented.

A magnetic tape whose atomic ratio, Ni/(Ni + Fe + Cr) was kept with a range of 0.4 to 0.92 had a thorough wearing resistance. When the atomic ratio was less than 0.4, no thorough wearing resistance could be obtained even by keeping the oxygen atomic ratio within said range.

A magnetic tape whose atomic ratio, Fe/(Ni + Fe + Cr), was kept within a range of 0.05 to 0.57 had a good corrosion resistance and the reproduction output power could be improved by increasing the saturation magnetization. When the atomic ratio was less than 0.05, the saturation magnetization could not be thoroughly increased, whereas, when the atomic ratio exceeded 0.57, the contents of Ni and Cr were lowered, and particularly there was a problem in the wearing resistance.

A magnetic tape whose atomic ratio, Cr/(Ni + Fe + Cr), was in a range of 0.03 to 0.3 had a good corrosion resistance and the reproduction output power was not lowered. When the atomic ratio was less than 0.03, there was a problem in the corrosion resistance, whereas, when the atomic ratio exceeded 0.3, the magnetic property of the protective film was lost and the reproduction output power was lowered.

Fig. 17 shows an enlarged cross-sectional view of a magnetic recording medium according to another embodiment of the present invention, which differs from the magnetic recording medium shown in Fig. 12 in that a lubricant layer 23 was further formed on the protective film 13. The lubricant layer 23 was composed of, for example, an aliphatic lubricant, a fluorocarbon lubricant, a silicone lubricant or a hydrocarbon lubricant, as already described before, and may contain an anti-corrosion agent, if required.

The spacing loss could be reduced by the magnetic protective film according to the present invention, as described above, and the corrosion resistance and wearing resistance could be considerably improved without deteriorating the reproduction output power characteristics.

Examples 36 to 41 and Comparative Example 5

Fig. 18 shows an enlarged cross-sectional view of a magnetic recording medium according to the third aspect of the present invention and Fig. 19 is a schematic view of an apparatus for preparing a magnetic recording medium according to the present invention.

In a magnetic recording medium of the present invention shown in Fig. 18, a ferromagnetic metal film 12 having a thickness of 1,500 Å was formed by vapor deposition on one side of a film substrate 4 of polythylene terephthalate having a thickness of 10 $\mu$m, and then a Co-passivation layer 12a was formed on the ferromagnetic metal film 12. The passivation layer includes a layer of oxide or hydrated oxide of at least trivalent cobalt, for example, $Co_3O_4$, $Co_2O_3$, $Co_3O_4 \cdot nH_2O$ or $Co_2O_2 \cdot nH_2O$. Particularly, amorphous hydrated oxide had a high anticorrosion effect.

By further forming a protective film 13 containing Ni as the main component on the surface of the Co passivation layer 12a, the corrosion resistance could be improved. Ni had a higher corrosion resistance than that of Co and served as an effective protective film against a corrosive gas. Particularly, when the protective film had an atomic ratio, Fe/Ni, of 0.05 or more, the protective film had a further improved resistance against a corrosive gas.

When the protective film contained 10 to 50% by atom of oxygen and an atomic ratio, Fe/Ni, of not more than 0.4, the protective film had a thorough wearing resistance. When the oxygen content was less than 10% by atom, the protective film turned soft, whereas, when the oxygen content exceeded 50% by atom, the wearing resistance was lowered. When Fe/Ni was more than 0.4, no thorough wearing resistance could be obtained even within said range of oxygen content.

The apparatus for preparing a magnetic recording medium according to the present invention will be described below, referring to Fig. 19.

In the apparatus for vapor deposition shown in Fig. 19, a cooling drum 5 was rotatably provided in a vacuum chamber 2 and an evaporation source 30 for evaporating a vapor-depositable material toward the side end of the cooling drum 5 was provided at the bottom of the vacuum chamber 2. An unwinding roll 3 for forwarding a film substrate 4 to the cooling drum 4 and a winding roll 6 for winding up the film substrate 4 were provided above the cooling drum 5 on both sides thereof, respectively.

In order to control the area for vapor deposition from the evaporation source 30, a deposition-masking plate 9 was horizontally provided below the cooling drum 5 and an oxygen inlet 11 for leading an oxygen gas to the site above the front end of the deposition-masking plate 9.

In order to prepare a magnetic recording medium according to the invention, the film substrate 4 is forwarded to the cooling drum 5 from the unwinding roll 3 and made to run along the cooling drum 5 and wound up onto the winding roll 6. The evaporation source 30 was actuated while making the film substrate to run at a constant speed.

Then, a Co-Ni alloy was vapor deposited onto the film substrate 4 having a thickness of 10 $\mu$m on the cooling drum 5 to form a ferromagnetic metal film of Co-Ni film 12 to a thickness of 1,500 Å.

Then, the thus prepared primary film was left standing in an atmosphere at 60°C and 30% RH, for example, for a week, whereby a layer of amorphous hydrated oxide ($Co_2O_3 \cdot nH_2O$) was formed on the surface of the ferromagnetic metal film of Co-Ni. Then, an oxygen gas was introduced from the oxygen inlet 11 at a rate of 200 ml/min and a Ni-Fe alloy (80 wt.%Ni-20 wt.%Fe) was vapor deposited onto the amorphous hydrated oxide layer from the vapor source 30 to form a protective film 13 of Ni-Fe to a thickness of 150 Å, whereby the magnetic recording medium was obtained.

Various magnetic recording media were further prepared by changing the composition of the protective film, as given in Table 5.

## Table 5

| Sample | Composition of protective film | | Sulfur content (at %) | Change in friction coefficient | Still life time (min) |
|---|---|---|---|---|---|
| | O/Ni-Fe-O | Fe/Ni | | | |
| Example 36 | 0.30 | 0.25 | 11 | none | >60 |
| Example 37 | 0.28 | 0 | 18 | " | >60 |
| Example 38 | 0.51 | 0.25 | 13 | " | 35 |
| Example 39 | 0.03 | 0.25 | 11 | " | 5 |
| Example 40 | 0.31 | 0.50 | 10 | " | 15 |
| Com. Ex. 5 | – | – | 43 | " | 37 |
| Example 41 | 0.30 | 0.25 | 13 | yes | >60 |

In Example 38 the oxygen feed rate was 500 ml/min, in Comparative Example 5, no protective film was formed, and in Example 41 no Co passivation layer was formed.

The corrosion resistance was determined by the sulfur content (at.%) and change in the friction coefficient when the magnetic recording medium was left standing in a corrosive gas atmosphere containing 1 PPM $SO_2$, 0.5 PPM $H_2S$ and 1 PPM $NO_2$ at 35°C and 70% RH for 24 hours, and the wearing resistance was determined by still life time (min), using a commercially available VTR of VHS system.

As is apparent from Table 5, the magnetic recording media of Examples 36 and 37 had good corrosion resistance, wearing resistance, whereas the magnetic recording media according to Examples 38 to 40, where the atomic ratio was outside said ranges, had a good corrosion resistance but a poor wearing resistance. The magnetic recording medium according to Comparative Example 5, where no protective film was provided, had poor corrosion resistance and wearing resistance, and the magnetic recording medium according to Example 41, where no Co passivation layer was provided, had a poor corrosion resistance.

As described above, the corrosion resistance and wearing resistance of a magnetic recording medium could be further increased by providing a Co passivation layer on the surface of the ferromagnetic metal film and further a protective film thereon.

## Claims

1. A magnetic recording medium which comprises a non-magnetic substrate, a ferromagnetic metal film on the non-magnetic substrate and a protective film on the ferromagnetic metal film, the ferromagnetic metal film and the protective film being composed of aggregates of columnar particles inclined to the normal line to the non-magnetic substrate, the maximum angle of inclination, to the line normal to the non-magnetic substrate, of the aggregate of columnar particles in the protective film being 80°.

2. A magnetic recording medium according to claim 1, wherein inclinations in the longitudinal direction of the columnar particles in the ferromagnetic metal film and the protective film to the line normal to the non-magnetic substrate are in identical directions with each other.

3. A magnetic recording medium according to claim 1, wherein inclinations in the longitudinal direction of the columnar particles in the ferromagnetic metal film and the protective film to the line normal to the non-magnetic substrate are in opposite directions to each other.

4. A magnetic recording medium according to claim 3, wherein the columnar particles in the ferromagnetic metal film are inclined at an angle of 40° to 90° in the longitudinal direction to the line normal to the non-magnetic substrate.

5. A magnetic recording medium according to claim 4, wherein the columnar particles in the ferromagnetic metal film are inclined at an angle of 40° to 75° and the columnar particles in the protective film are inclined at an angle of inclination of 40° to 75°.

6. A magnetic recording medium according to any one of claims 1 to 5 wherein the ferromagnetic metal film is composed of cobalt or an alloy containing cobalt as the main component, and oxygen.

7. A magnetic recording medium according to any one of claims 1 to 6 wherein the protective film is composed of nickel or a nickel alloy containing nickel as the main component, and oxygen.

8. A magnetic recording medium according to claim 7, wherein the protective film is composed of Ni-Fe-O alloy having an atomic ratio, Ni/(Ni + Fe), of from 0.40 to 0.95 and an atomic ratio, O/(Ni + Fe + O), of from 0.1 to 0.5.

9. A magnetic recording film according to claim 7, wherein the Ni-Fe-Cr-O alloy has an atomic ratio, Ni/(Ni + Fe + Cr), of from 0.4 to 0.92, and atomic ratio, Fe/(Ni + Fe + Cr), of from 0.05 to 0.57, an atomic ratio, Cr/Ni + Fe + Cr), of from 0.03 to 0.3 and atomic ratio, O/(Ni + Fe + Cr + O), of from 0.10 to 0.5.

10. A magnetic recording medium according to any one of claims 1 to 9 wherein the protective film is rich in oxygen on the side adjacent to the film or on the side remote from the ferromagnetic metal film or on both sides.

11. A magnetic recording medium according to any one of claims 1 to 10 wherein the non-magnetic substrate has projections on the surface.

12. A magnetic recording medium according any one of claims 1 to 11 further comprising at least one of a lubricant layer and an anti-corrosion layer on the side of the protective film remote from the ferromagnetic metal film.

**13.** A magnetic recording medium according to any one of claims 1 to 12 wherein the ferromagnetic metal film is composed of cobalt as the main component and which further comprises a cobalt passivation layer on the surface of the ferromagnetic film layer remote from the substrate.

**14.** A magnetic recording medium according to claim 13 wherein the cobalt passivation layer contains oxide and hydrated oxides of at least trivalent cobalt.

**15.** A magnetic recording medium according to claim 14 wherein the protective film is a film composed of nickel as the main component and containing 10 to 50% by atom of oxygen.

**16.** A process for producing a magnetic recording medium according to any preceding claim comprising forming, on a nonmagnetic substrate, a ferromagnetic metal film by deposition of aggregates of columnar particles inclined to the line normal to the non-magnetic substrate and forming a protective film of columnar particles inclined to the line normal to the non-magnetic substrate whilst preventing formation of highly inclined aggregates in the protective film.

**Patentansprüche**

**1.** Magnettonträger mit einem nichtmagnetischen Substrat, einer ferromagnetischen Metallfolie auf dem nichtmagnetischen Substrat und einer Schutzfolie auf der ferromagnetischen Metallfolie, wobei die ferromagnetische Metallfolie und die Schutzfolie aus Aggregaten säulenförmiger Partikel bestehen, die zur Senkrechten in Bezug auf das nichtmagnetische Substrat geneigt sind, wobei der maximale Neigungswinkel des Aggregats säulenförmiger Partikel in der Schutzfolie zur Senkrechten in Bezug auf das nichtmagnetische Substrat 80° beträgt.

**2.** Magnettonträger gemäß Anspruch 1, bei dem die Neigungen in der Längsrichtung der säulenförmigen Partikel in der ferromagnetischen Metallfolie und in der Schutzfolie zur Senkrechten in Bezug auf das nichtmagnetische Substrat relativ zueinander gleiche Richtungen aufweisen.

**3.** Magnettonträger gemäß Anspruch 1, bei dem die Neigungen in der Längsrichtung der säulenförmigen Partikel in der ferromagnetischen Metallfolie und in der Schutzfolie zur Senkrechten in Bezug auf das nichtmagnetische Substrat relativ zueinander entgegengesetzte Richtungen aufweisen.

**4.** Magnettonträger gemäß Anspruch 3, bei dem die säulenförmigen Partikel in der ferromagnetischen Metallfolie unter einem Winkel von 40° bis 90° in Längsrichtung zur Senkrechten in Bezug auf das nichtmagnetische Substrat geneigt sind.

**5.** Magnettonträger gemäß Anspruch 4, bei dem die säulenförmigen Partikel in der ferromagnetischen Metallfolie unter einem Winkel von 40° bis 75° geneigt und die säulenförmigen Partikel in der Schutzfolie unter einem Winkel von 40° bis 75° geneigt sind.

**6.** Magnettonträger gemäß einem der Ansprüche 1 bis 5, bei dem die ferromagnetische Metallfolie aus Kobalt oder einer Legierung, die als Hauptkomponente Kobalt enthält, und aus Sauerstoff besteht.

**7.** Magnettonträger gemäß einem der Ansprüche 1 bis 6, bei dem die Schutzfolie aus Nickel oder einer Legierung, die als Hauptkomponente Nickel enthält, und aus Sauerstoff besteht.

**8.** Magnettonträger gemäß Anspruch 7, bei dem die Schutzfolie aus einer Ni-Fe-O-Legierung mit einem Atomverhältnis für $Ni/(Ni + Fe)$ von 0,40 bis 0,95 und für $O/(Ni + Fe + O)$ von 0,1 bis 0,5 besteht.

**9.** Magnettonfolie gemäß Anspruch 7, bei dem die Ni-Fe-Cr-O-Legierung ein Atomverhältnis für $Ni/(Ni + Fe + Cr)$ von 0,4 bis 0,92, für $Fe/(Ni + Fe + Cr)$ von 0,05 bis 0,57, für $Cr/(Ni + Fe + Cr)$ von 0,03 bis 0,3 und für $O/(Ni + Fe + Cr + O)$ von 0,10 bis 0,5 aufweist.

**10.** Magnettonträger gemäß einem der Ansprüche 1 bis 9, bei dem die Schutzfolie auf der an der Folie anliegenden Seite oder an der von der ferromagnetischen Metallfolie entfernten Seite oder an beiden Seiten reich an Sauerstoff ist.

**11.** Magnettonträger gemäß einem der Ansprüche 1 bis 10, bei dem das nichtmagnetische Substrat Vorsprünge auf der Oberfläche aufweist.

**12.** Magnettonträger gemäß einem der Ansprüche 1 bis 11, der weiterhin mindestens eine Schmierschicht und eine korrosionsbeständige Schicht auf der Seite der Schutzfolie umfaßt, die von der ferromagnetischen Metallfolie entfernt ist.

**13.** Magnettonträger gemäß einem der Ansprüche 1 bis 12, bei dem die ferromagnetische Metallfolie aus Kobalt als der Hauptkomponente besteht, und der weiterhin in einer Entfernung vom Substrat auf der Oberfläche der ferromagnetischen Metallfolie eine Kobaltpassivierungsschicht umfaßt.

**14.** Magnettonträger gemäß Anspruch 13, bei dem die Kobaltpassivierungsschicht Oxid und hydrierte Oxide aus zumindest trivalentem Kobalt enthält.

**15.** Magnettonträger gemäß Anspruch 14, bei dem die Schutzfolie eine Folie ist, die aus Nickel als Hauptkomponente und aus 10 bis 50 Atom-% Sauerstoff besteht.

**16.** Verfahren zur Herstellung eines Magnettonträgers gemäß einem der vorhergehenden Ansprüche, mit den Schritten:
Ausbilden einer ferromagnetischen Metallfolie auf einem nichtmagnetischen Substrat durch Anlagern von Aggregaten säulenförmiger Partikel, die zur Senkrechten in Bezug auf das nichtmagnetische Substrat geneigt sind, und
Ausbilden einer Schutzfolie säulenförmiger Partikel, die zur Senkrechten in Bezug auf das nichtmagnetische Substrat geneigt sind,
wobei die Ausbildung stark geneigter Aggregate in der Schutzfolie verhindert wird.

**Revendications**

**1.** Support d'enregistrement magnétique, qui comporte un substrat non-magnétique, une couche de métal ferromagnétique placée par-dessus le substrat non-magnétique, et une couche protectrice placée par-dessus la couche de métal ferromagnétique, la couche de métal ferromagnétique et la couche protectrice étant constituées d'aggrégats de bâtonnets inclinés par rapport à la perpendiculaire au substrat non-magnétique, l'angle maximal d'inclinaison, par rapport à la perpendiculaire au substrat non-magnétique, des aggrégats de bâtonnets de la couche protectrice valant 80°.

**2.** Support d'enregistrement magnétique conforme à la revendication 1, dans lequel les bâtonnets de la couche de métal ferromagnétique et les bâtonnets de la couche protectrice sont inclinés, dans le sens de leur longueur et par rapport à la perpendiculaire au substrat non-magnétique, dans la même direction.

**3.** Support d'enregistrement magnétique conforme à la revendication 1, dans lequel les bâtonnets de la couche de métal ferromagnétique et les bâtonnets de la couche protectrice sont inclinés, dans le sens de leur longueur et par rapport à la perpendiculaire au substrat non-magnétique, dans des directions opposées l'une à l'autre.

**4.** Support d'enregistrement magnétique conforme à la revendication 3, dans lequel les bâtonnets de la couche de métal ferromagnétique sont inclinés, dans le sens de leur longueur et par rapport à la perpendiculaire au substrat non-magnétique, d'un angle de 40° à 90°.

**5.** Support d'enregistrement magnétique conforme à la revendication 4, dans lequel les bâtonnets de la couche de métal ferromagnétique sont inclinés d'un angle de 40° à 75°, et les bâtonnets de la couche protectrice sont inclinés d'un angle de 40° à 75°.

**6.** Support d'enregistrement magnétique conforme à l'une des revendications 1 à 5, dans lequel la couche de métal ferromagnétique est constituée de cobalt ou d'un alliage contenant du cobalt, en tant que composant principal, et de l'oxygène.

**7.** Support d'enregistrement magnétique conforme à l'une des revendications 1 à 6, dans lequel la couche protectrice est constituée de nickel ou d'un alliage contenant du nickel, en tant que composant principal, et de l'oxygène.

**8.** Support d'enregistrement magnétique conforme à la revendication 7, dans lequel la couche protectrice est constituée d'un alliage Ni-Fe-O dans lequel le rapport atomique Ni/(Ni + Fe) vaut de 0,40 à 0,95 et le rapport atomique O/(Ni + Fe + O) vaut de 0,1 à 0,5.

**9.** Support d'enregistrement magnétique conforme à la revendication 7, dans lequel la couche protectrice est constituée d'un alliage Ni-Fe-Cr-O dans lequel le rapport atomique Ni/(Ni + Fe + Cr) vaut de 0,40 à 0,92, le rapport atomique Fe/(Ni + Fe + Cr) vaut de 0,05 à 0,57, le rapport atomique Cr/(Ni + Fe + Cr) vaut de 0,03 à 0,3 et le rapport atomique O/(Ni + Fe + Cr + O) vaut de 0,10 à 0,5.

**10.** Support d'enregistrement magnétique conforme à l'une des revendications 1 à 9, dans lequel la couche protectrice est riche en oxygène du côté adjacent à la couche de métal ferromagnétique, ou de l'autre côté, ou des deux côtés.

**11.** Support d'enregistrement magnétique conforme à l'une des revendications 1 à 10, dans lequel la surface du substrat non-magnétique porte des protubérances.

**12.** Support d'enregistrement magnétique conforme à l'une des revendications 1 à 11, qui comporte en outre, du côté de la couche protectrice non-adjacent à la couche de métal ferromagnétique, au moins une couche choisie parmi une couche de lubrifiant et une couche anti-corrosion.

**13.** Support d'enregistrement magnétique conforme à l'une des revendications 1 à 12, dans lequel le constituant principal de la couche de métal ferromagnétique est du cobalt, et qui comporte en outre une couche de passivation du cobalt, placée sur le côté de la couche de métal ferromagnétique non-adjacent au substrat.

**14.** Support d'enregistrement magnétique conforme à la revendication 13, dans lequel la couche de passivation du cobalt contient de l'oxyde ou des hydrates d'oxyde de cobalt au moins trivalent.

**15.** Support d'enregistrement magnétique conforme à la revendication 14, dans lequel la couche protectrice est une couche dont le constituant principal est du nickel et qui contient de 10 % à 50 % d'oxygène, en nombre d'atomes.

**16.** Procédé de production d'un support d'enregistrement magnétique conforme à l'une quelconque des revendications précédentes, comprenant le fait de former, sur un substrat non-magnétique, une couche de métal ferromagnétique par dépôt d'aggrégats de bâtonnets inclinés par rapport à la perpendiculaire au substrat non-magnétique, et le fait de former une couche protectrice de bâtonnets inclinés par rapport à la perpendiculaire au substrat non-magnétique, tout en empêchant la formation d'aggrégats fortement inclinés dans la couche protectrice.

FIG. 1

FIG. 2

FIG. 3

FIG. 4

FIG. 5

FIG. 6

FIG. 7

FIG. 8

FIG. 9

## FIG. 10

## FIG. 11

FIG. 12

FIG. 17

FIG. 18

FIG. 19

FIG. 13

FIG. 14

EP 0 274 437 B1

FIG. 15

Ni

$$\frac{Ni}{Ni+Fe+Cr}$$

$$\frac{Cr}{Ni+Fe+Cr}$$

Fe
Cr

$$\frac{Fe}{Ni+Fe+Cr}$$

FIG. 16

Ni

$$\frac{Ni}{Ni+Fe+Cr}$$

$$\frac{Cr}{Ni+Fe+Cr}$$

Fe
Cr

$$\frac{Fe}{Ni+Fe+Cr}$$

27